# EUROPÄISCHE PATENTSCHRIFT

(11) **EP 3 459 804 B1**
(45) Veröffentlichungstag und Bekanntmachung des Hinweises auf die Patenterteilung: **08.04.2020**
(21) Anmeldenummer: 18189077.3
(22) Anmeldetag: 15.08.2018
(51) Int. Cl.: B60T 15/02, F16K 17/04, F16K 15/14

(54) **VENTIL UND PNEUMATISCHE BREMSANLAGE**
VALVE AND PNEUMATIC BRAKE SYSTEM
VALVE ET SYSTÈME DE FREINAGE PNEUMATIQUE

(30) Priorität: 26.09.2017 DE 102017009016
(43) Veröffentlichungstag der Anmeldung: 27.03.2019
(73) Patentinhaber: WABCO GmbH, 30453 Hannover (DE)
(72) Erfinder: HERMSDORF, Uwe, 39130 Magdeburg (DE); STEPHAN, Arne, 30177 Hannover (DE); SIEKER, Armin, 33611 Bielefeld (DE)
(74) Vertreter: Koschnitzki, Thomas

(56) Entgegenhaltungen:
- EP-A1- 1 956 277
- EP-A2- 1 410 969
- WO-A1-2016/064422
- WO-A1-2017/076889
- DE-A1- 4 216 247
- DE-A1-102009 025 502
- DE-A1-102010 047 401
- DE-A1-102012 108 538

## Beschreibung

Die Erfindung betrifft ein Ventil, für pneumatische Anwendungen in Fahrzeugen, mit Druckeingang, Druckausgang, Schaltelement und Rückstellelement, wobei das Schaltelement bewegbar ist zwischen einer Sperrstellung und einer Durchlassstellung, wobei der Übergang von der Durchlassstellung zur Sperrstellung vom Druck am Druckeingang und der Gegenkraft des Rückstellelements abhängt, und wobei ein Rückschlagelement in das Schaltelement integriert ist. Daneben betrifft die Erfindung eine pneumatische Bremsanlage mit einem derartigen Ventil.

Sperrventile und Rückschlagventile sind aus verschiedensten pneumatischen und hydraulischen Anwendungen bekannt. Die Ventile können miteinander kombiniert werden, um bestimmte funktionale Anforderungen zu erfüllen. In großen Stückzahlen sind derartige Kombinationen von Ventilen aber hinsichtlich Kosten und Platzbedarf nachteilig.

Ein Magnetventil mit integriertem Rückschlagventil ist in der WO 2006/074920 A1 offenbart. Nachteilig ist hier zumindest die erforderliche Versorgung mit elektrischer Energie.

Druckbegrenzungsventile mit integriertem Rückschlagventil zeigen die AT 318996, EP 0645289 B1, die WO 2016/064422 A1, die US 2015/0035350 A1 und DE 102006033429 B4. Entsprechend ihrer Funktion als Druckbegrenzungsventile sperren diese ab einem gewissen Grenzdruck den Weg vom Druckeingang zum Druckausgang.

Aufgabe der vorliegenden Erfindung ist die Schaffung eines integrierten Ventils mit Sperrfunktion und Rückschlagfunktion, insbesondere ohne das Erfordernis einer Hilfsenergie, und mit Durchlass auch in Sperrstellung des Schaltelements.

Ein erfindungsgemäßes Ventil weist die Merkmale des Anspruchs 1 auf. Insbesondere ist vorgesehen, dass das Rückschlagelement in Sperrstellung des Schaltelements einen Durchlass in Richtung vom Druckeingang zum Druckausgang freigeben kann. Der Durchlass über das Rückschlagelement ist auch in Durchlassstellung des Schaltelements möglich, wird dann aber nicht benötigt. Über das Ventil können so nahezu beliebige Drücke übertragen werden, auch wenn sich das Schaltelement in Sperrstellung befindet. Das Rückschlagelement schließt nur, wenn der Druck am Druckausgang höher ist als am Druckeingang. Schaltelement und/oder Rückschlagelement sind vorzugsweise axial bewegbar. Insbesondere sind Schaltelement und Rückstellelement koaxial bewegbar.

Vorzugsweise ist der Übergang von der Durchlassstellung zur Sperrstellung des Schaltelements, also die Sperrfunktion des Schaltelements, ausschließlich vom Druck am Druckeingang und der Gegenkraft des Rückstellelements abhängig. Elektrische Hilfsenergie wird nicht benötigt. Die Sperrfunktion wird in Abhängigkeit vom Druck am ohnehin belegten Druckeingang aktiviert. Einstellbar ist der relevante Schaltdruck durch Auswahl des Rückstellelements für das Schaltelement und in Abhängigkeit von der Dimensionierung der betroffenen Ventilquerschnitte.

Nach einem weiteren Gedanken der Erfindung ist dem Rückschlagelement ein Rückstellelement zugeordnet, welches das Rückschlagelement insbesondere koaxial zum Rückstellelement des Schaltelements beaufschlagt. Das Rückstellelement für das Rückschlagelement ist vorzugsweise ebenfalls in das Schaltelement integriert. Das Rückschlagelement wird durch eine Druckdifferenz von seinem Dichtsitz abgehoben, begrenzt durch die Kraft des Rückstellelements. Dadurch entsteht ein Spalt, durch den die Druckdifferenz abgebaut werden kann, bei höherer Druckdifferenz ein entsprechend größerer Spalt.

Nach einem weiteren Gedanken der Erfindung weist das Schaltelement eine oder mehrere Öffnungen auf, welche in einer Durchlassstellung des Rückschlagelements den Druckeingang mit einem zum Druckausgang führenden Raum verbinden, wobei der Raum insbesondere außerhalb des Schaltelements vorgesehen ist.

Der Übergang des Schaltelements von der Durchlassstellung zur Sperrstellung ist vorteilhafterweise von der Differenz zwischen dem Druck am Druckeingang und einem Außendruck (Atmosphärendruck) abhängig, während die Funktion des Rückschlagelements abhängig ist von der Druckdifferenz zwischen Druckeingang und Druckausgang. Ist der Druck am Druckausgang höher als am Druckeingang, nimmt das Rückschlagelement seine Sperrstellung ein, anderenfalls seine Durchlassstellung.

Die Rückstellelemente, nämlich das Rückstellelement des Schaltelements und das Rückstellelement des Rückschlagelements sind vorzugsweise Druckfedern. Dabei ist das Rückstellelement des Schaltelements vorzugsweise stärker dimensioniert (mit höherer Federkraft) als das Rückstellelement des Rückschlagelements. Die beiden Rückstellelemente sind vorzugsweise koaxial angeordnet.

Nach einem weiteren Gedanken der Erfindung ist das Rückschlagelement insbesondere koaxial zum Schaltelement bewegbar zwischen Sperrstellung und Durchlassstellung, wobei in der Sperrstellung des Rückschlagelements ein umlaufender Dichtsitz an einer Dichtung anliegt und insbesondere das Rückschlagelement die Dichtung aufweist.

Nach einem weiteren Gedanken der Erfindung ist die mit dem Dichtsitz des Schaltelements zusammenwirkende Dichtung innen in ein zylindrisches Gehäuse eingesetzt.

Nach einem weiteren Gedanken der Erfindung weist das Schaltelement in Axialrichtung/stirnseitig eine Öffnung mit Rändern zur Anlage des Rückschlagelements auf, wobei die Öffnung mit dem Druckeingang verbunden ist.

Nach einem weiteren Gedanken der Erfindung weist das Schaltelement auf einer der Öffnung gegenüberliegenden Seite des Rückschlagelements ein Rückstellelement für das Rückschlagelement und eine Aufnahme für das Rückstellelement auf.

Nach einem weiteren Gedanken der Erfindung weist das Schaltelement seitlich, zwischen den Rändern zur Anlage des Rückschlagelements und dem Rückschlagelement in Durchlassstellung, Öffnungen zur Verbindung des Druckeingangs mit einem Raum außerhalb des Schaltelements auf, wobei der Raum mit dem Druckausgang verbunden ist.

Nach einem weiteren Gedanken der Erfindung ist das Schaltelement in einem zylindrischen Gehäuse axial bewegbar, mit dem Rückstellelement an einem Ende und dem Rückschlagelement am anderen Ende, wobei das Gehäuse im Bereich des Rückstellelements für das Schaltelement eine Öffnung aufweist, insbesondere zur Verbindung mit Atmosphärendruck. Das Schaltelement weist vorzugsweise im Bereich seines Rückstellelements außenseitig eine umlaufende Dichtung zum Gehäuse auf.

Nach einem weiteren Gedanken der Erfindung weist das Schaltelement, der Öffnung im Gehäuse gegenüberliegend, eine Kammer zur Aufnahme eines Teils des Rückstellelements auf. Außerdem weist das Schaltelement außenseitig auf Höhe der Kammer vorzugsweise eine Dichtung zum Gehäuse auf.

Nach einem weiteren Gedanken der Erfindung ist das Schaltelement zweiteilig ausgebildet, nämlich mit einem ersten, doppelttopfförmigen Teil zur Aufnahme des Rückstellelements für das Schaltelement an einem Ende und zur Aufnahme des Rückstellelements für das Rückschlagelement am anderen Ende, und mit einem zweiten, zylindrischen Teil, in welchem das Rückschlagelement bewegbar ist, wobei der zylindrische Teil teilweise über den doppelttopfförmigen Teil geschoben ist.

Gegenstand der Erfindung ist auch eine pneumatische Bremsanlage mit einem Ventil gemäß den voranstehenden Ausführungen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: ein pneumatisches Schaltbild der Ventilfunktion mit Zuständen a und b,
- Fig. 2: einen Längsschnitt durch das Ventil entsprechend Fig. 1, Zustand a, mit nur kleinem Druck am Druckeingang,
- Fig. 3: das Ventil im Längsschnitt wie in Fig. 2, jedoch mit einem Zustand entsprechend Fig. 1, Zustand b, mit hierzu ausreichend großem Druck am Druckeingang,
- Fig. 4: das Ventil im Längsschnitt wie in Fig. 3, mit großem Druck am Druckeingang, jedoch mit noch höherem Druck am Druckausgang und aktiver Rückschlagfunktion.

Ein Ventil 10 mit Druckeingang 11 und Druckausgang 12 weist eine Sperrfunktion und eine Rückschlagfunktion auf. Das Ventil 10 ist hier als 2/2-Wege-Ventil ausgebildet.

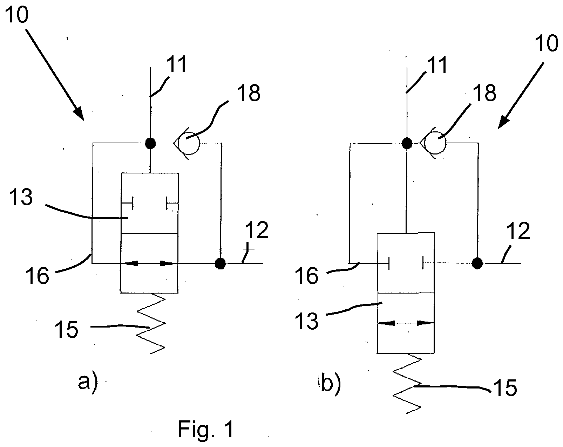

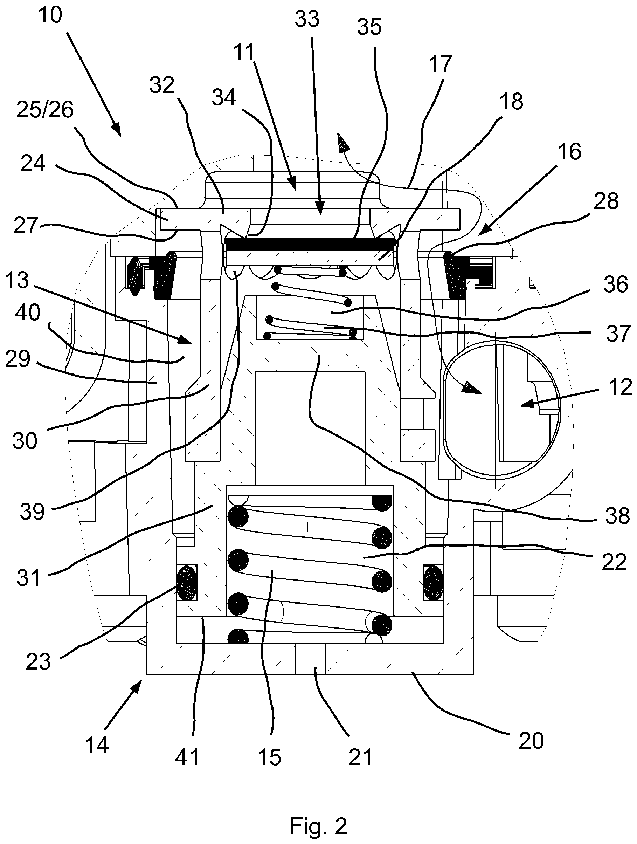

Die Sperrfunktion ergibt sich aus der Position eines kolbenartigen Schaltelements 13 in einem zylindrischen Gehäuse 14 und im Zusammenwirken mit einer Druckfeder als Rückstellelement 15. Solange am Druckeingang 11 nur wenig Druck anliegt, überwiegt die Kraft des Rückstellelements 15 und das Schaltelement 13 befindet sich in Durchlassstellung gemäß Teil a der Figur 1. Dabei sind Druckeingang 11 und Druckausgang 12 über einen Bypass 16 miteinander verbunden, siehe auch Fig. 2 mit der dort eingezeichneten Luftströmung 17 durch den Bypass 16.

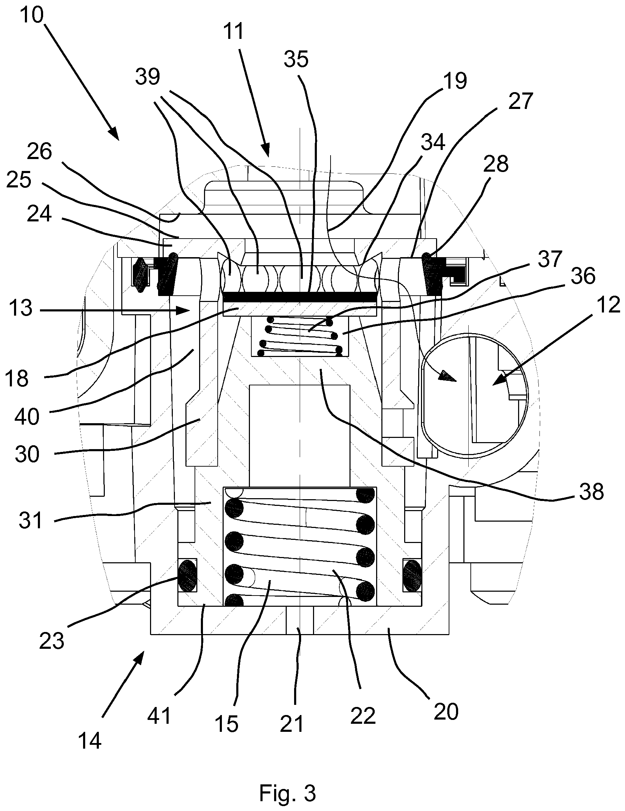

In Sperrstellung des Schaltelements 13 gemäß Teil b Fig. 1 ist der Bypass 16 verschlossen. Möglich ist dieser Zustand, wenn der Druck am Druckeingang 11 die Kraft des Rückstellelements 15 überwindet. Eine Luftströmung vom Druckeingang 11 zum Druckausgang 12 ist dann nur entlang eines Rückschlagelements 18 möglich, siehe Luftströmung 19 in Fig. 3.

Das Gehäuse 14 weist an einer Stirnseite, welche hier nur zur Vereinfachung als Boden 20 bezeichnet wird, eine Entlüftungs-Öffnung 21 auf. Der Öffnung 21 gegenüberliegend ist das Schaltelement 13 mit einer Kammer 22 zur Aufnahme des Rückstellelements 15 versehen. Im Bereich der Kammer 22 ist das Schaltelement 13 mit einer außen umlaufenden Dichtung 23 versehen, welche zum Gehäuse 14 abdichtet. Bei Bewegung des Schaltelements 13 findet ein Gaswechsel zur Kammer 22 nur durch die Entlüftungs-Öffnung 21 statt.

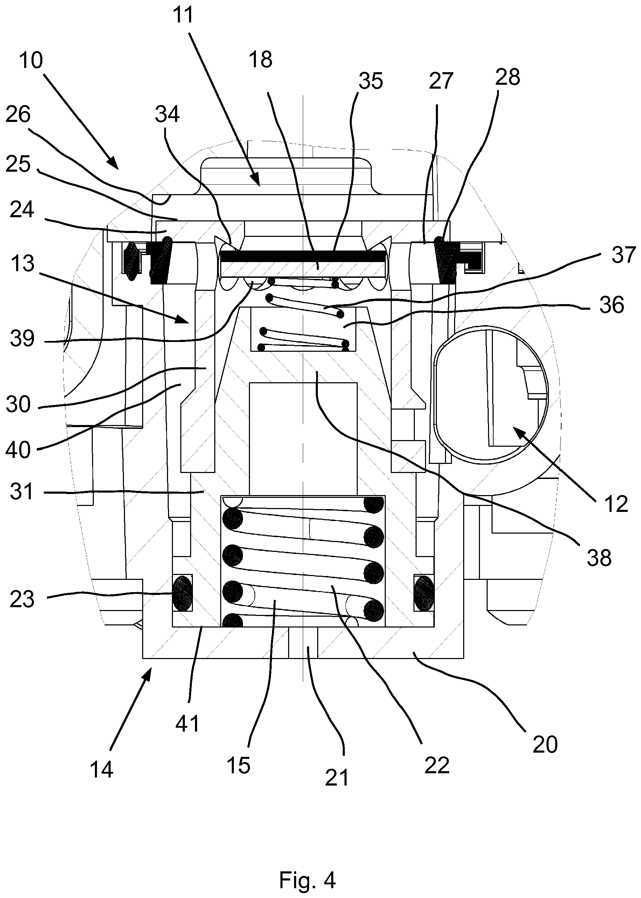

Vom Boden 20 axial entfernt liegend weist das Schaltelement 13 einen umlaufenden Kragen 24 auf. Dieser wirkt in Durchlassstellung gemäß Fig. 2 als Anschlag 25 an einem inneren, stirnseitigen Gehäuseflansch 26 und liegt dort an. In Sperrstellung gemäß den Figuren 3 und 4 bildet der Kragen 24 einen Dichtsitz 27 zur Anlage an einer umlaufenden Dichtung 28. Die Dichtung 28 ragt von einer umlaufenden Zylinderwandung 29 radial nach innen und zugleich axial in Richtung auf den Druckeingang 11. Dabei reicht die Dichtung 28 in Radialrichtung nicht bis an das Schaltelement 13 heran. Ein Kontakt ist nur möglich mit dem Kragen 24 in Sperrstellung. Somit erstreckt sich der Dichtsitz 27 in einer radial gerichteten Ebene. In Durchlassstellung gemäß Fig. 2 verläuft die Luftströmung 17 vom Druckeingang 11 um den Kragen 24 herum, zwischen Dichtung 28 und Schaltelement 13, bis zum Druckausgang 12, und umgekehrt.

Das kolbenartige Schaltelement 13 ist hier zweiteilig ausgebildet, nämlich mit einem zylindrischen Teil 30 und einem doppelttopfförmigen Teil 31. Dabei ist der zylindrische Teil 30 mit einem Teil seiner Länge über einen Teil des doppelttopfförmigen Teils 31 gesteckt und fest mit diesem verbunden.

Der zylindrische Teil 30 ist mit seiner Stirnseite 32 dem Druckeingang 11 zugewandt und weist eine große Öffnung 33 auf mit einem einwärts (zum Teil 31) gerichteten umlaufenden Rand 34. Dieser wirkt als Dichtsitz für das hier scheibenförmige Rückschlagelement 18, welches mit einer Dichtung 35 belegt ist.

Der doppelttopfförmige Teil 31 weist an einem Ende die bereits erwähnte Kammer 22 auf, in welcher das Rückstellelement 15 sitzt. Zusätzlich weist der doppelttopfförmige Teil 31 an seinem anderen Ende eine Kammer 36 zur Aufnahme eines Rückstellelements 37 für das Rückschlagelement 18 auf. Auch das Rückstellelement 37 ist hier eine Druckfeder. Diese liegt der Dichtung 35 gegenüber am Rückschlagelement 18 an. Die beiden Kammern 22, 36 sind durch eine Querwand 38 voneinander getrennt und an Stirnseiten des doppelttopfförmigen Teils 31 offen.

Der zylindrische Teil 30 weist nahe dem umlaufenden Rand 34 radial gerichtete Öffnungen 39 auf, die den Weg für die Luftströmung 19 freigeben, sobald das Rückschlagelement 18 gegen die Kraft des Rückstellelements 37 mit Druck aus dem Druckeingang 11 belastet ist und ein Spalt zwischen Rand 34 und Dichtung 35 gebildet ist, siehe Fig. 3. Dabei verläuft die Luftströmung 19 vom Druckeingang 11 durch die Öffnung 33, durch die Öffnungen 39 in einen Ringraum 40 zwischen Gehäuse 14 und Schaltelement 13 bzw. zylindrischem Teil 30 bis zum Druckausgang 12.

Schaltelement 13 und Gehäuse 14 sind so aufeinander abgestimmt dimensioniert, dass in Sperrstellung nicht nur die Dichtung 28 am Dichtsitz 27 anliegt, sondern auch das Schaltelement 13 mit einer Stirnseite 41 am Boden 20. Dadurch ist sichergestellt, dass die Dichtung 28 nicht überlastet wird.

Das zuvor erläuterte Ventil 10 ist hochintegriert und nimmt alle für die Sperrfunktion und Rückschlagfunktion erforderlichen beweglichen Bauteile im Gehäuse 14 auf. Das Rückschlagelement 18 ist vollständig in das Schaltelement 13 integriert, auch der Rand 34 als Dichtsitz für das Rückschlagelement 18.

Schaltelement 13, Rückstellelement 18 und beide Rückstellelemente 15, 37 sind koaxial angeordnet bzw. bewegbar.

Das Ventil 10 wird vorzugsweise verwendet in einer pneumatischen Bremsanlage von Fahrzeugen oder in anderen pneumatischen Anlagen. Möglich ist auch eine Anwendung als Hydraulikelement in entsprechenden Anlagen.

**Bezugszeichenliste**

| | | | |
|---|---|---|---|
| 10 | Ventil | 38 | Querwand |
| 11 | Druckeingang | 39 | Öffnungen |
| 12 | Druckausgang | 40 | Ringraum |
| 13 | Schaltelement | 41 | Stirnseite |
| 14 | Gehäuse | | |
| 15 | Rückstellelement (des Schaltelements) | | |
| 16 | Bypass | | |
| 17 | Luftströmung | | |
| 18 | Rückschlagelement | | |
| 19 | Luftströmung | | |
| 20 | Boden | | |
| 21 | Entlüftungs-Öffnung | | |
| 22 | Kammer | | |
| 23 | Dichtung | | |
| 24 | Kragen | | |
| 25 | Anschlag | | |
| 26 | Gehäuseflansch | | |
| 27 | Dichtsitz | | |
| 28 | Dichtung | | |
| 29 | Zylinderwandung | | |
| 30 | zylindrischer Teil (des Schaltelements) | | |
| 31 | doppelttopfförmiger Teil (des Schaltelements) | | |
| 32 | Stirnseite | | |
| 33 | Öffnung | | |
| 34 | umlaufender Rand | | |
| 35 | Dichtung | | |
| 36 | Kammer | | |
| 37 | Rückstellelement (des Rückschlagelements) | | |

## Patentansprüche

1. Ventil (10), für pneumatische Anwendungen in Fahrzeugen, mit Druckeingang (11), Druckausgang (12), Schaltelement (13) und Rückstellelement (15), wobei das Schaltelement (13) bewegbar ist zwischen einer Sperrstellung und einer Durchlassstellung, wobei der Übergang von der Durchlassstellung zur Sperrstellung vom Druck am Druckeingang (11) und der Gegenkraft des Rückstellelements (15) abhängt, und wobei ein Rückschlagelement (18) in das Schaltelement (13) integriert ist, das nur schließt, wenn der Druck am Druckausgang (12) höher ist als am Druckeingang (11), **dadurch gekennzeichnet, dass** das Rückschlagelement (18) in Sperrstellung des Schaltelements (13) einen Durchlass in Richtung vom Druckeingang (11) zum Druckausgang (12) freigeben kann.

2. Ventil nach Anspruch 1, **dadurch gekennzeichnet, dass** dem Rückschlagelement (18) ein Rückstellelement (37) zugeordnet ist, welches das Rückschlagelement (18) insbesondere koaxial zum Rückstellelement (15) des Schaltelements (13) beaufschlagt.

3. Ventil nach Anspruch 1 oder 2, **dadurch gekennzeichnet, dass** das Schaltelement (13) eine oder mehrere Öffnungen (39) aufweist, welche in einer Durchlassstellung des Rückschlagelements (18) den Druckeingang (11) mit einem zum Druckausgang (12) führenden Raum (40) verbinden.

4. Ventil nach einem der Ansprüche 1 bis 3, **dadurch gekennzeichnet, dass** das Rückschlagelement (18) insbesondere koaxial zum Schaltelement (13) bewegbar ist, zwischen Sperrstellung und Durchlassstellung (Luftströmung 19), wobei in der Sperrstellung des Rückschlagelements (18) ein umlaufender Dichtsitz, insbesondere Rand (34), an einer Dichtung (35) anliegt, und wobei insbesondere das Rückschlagelement (18) die Dichtung (35) aufweist.

5. Ventil nach einem der Ansprüche 2 bis 4, **dadurch gekennzeichnet, dass** die mit dem Dichtsitz (27) des Schaltelements (13) zusammenwirkende Dichtung (28) innen in ein zylindrisches Gehäuse (14) eingesetzt ist.

6. Ventil nach einem der Ansprüche 1 bis 5, **dadurch gekennzeichnet, dass** das Schaltelement (13) in Axialrichtung stirnseitig eine Öffnung (33) mit umlaufendem Rand (34) zur Anlage des Rückschlagelements (18) aufweist, wobei die Öffnung (33) mit dem Druckeingang (11) verbunden ist.

7. Ventil nach Anspruch 6, **dadurch gekennzeichnet, dass** das Schaltelement (13) auf einer der Öffnung (33) gegenüberliegenden Seite des Rückschlagelements (18) ein Rückstellelement (37) für das Rückschlagelement (18) und eine Aufnahme für das Rückstellelement (37) aufweist.

8. Ventil nach Anspruch 6 oder 7, **dadurch gekennzeichnet, dass** das Schaltelement (13) seitlich, zwischen dem Rand (34) zur Anlage des Rückschlagelements (18) und dem Rückschlagelement (18) in Durchlassstellung, Öffnungen (39) zur Verbindung des Druckeingangs (11) mit einem Raum (40) außerhalb des Schaltelements (13) aufweist, wobei der Raum (40) mit dem Druckausgang (12) verbunden ist.

9. Ventil nach einem der Ansprüche 6 bis 8, **dadurch gekennzeichnet, dass** das Schaltelement (13) in einem zylindrischen Gehäuse (14) axial bewegbar ist, mit dem Rückstellelement (15) an einem Ende und dem Rückschlagelement (18) am anderen Ende, wobei das Gehäuse (14) im Bereich des Rückstellelements (15) für das Schaltelement (13) eine Öffnung (21) aufweist, insbesondere zur Verbindung mit Atmosphärendruck.

10. Ventil nach Anspruch 9, **dadurch gekennzeichnet, dass** das Schaltelement (13), der Öffnung (21) gegenüberliegend, eine Kammer (22) zur Aufnahme eines Teils des Rückstellelements (15) aufweist, und dass das Schaltelement (13) außenseitig auf Höhe der Kammer (22) vorzugsweise eine Dichtung (23) zum Gehäuse (14) aufweist.

11. Ventil nach einem der Ansprüche 1 bis 10, **dadurch gekennzeichnet, dass** das Schaltelement (13) zweiteilig ausgebildet ist, nämlich mit einem doppelttopfförmigen Teil (31) zur Aufnahme des Rückstellelements (15) für das Schaltelement (13) an einem Ende und zur Aufnahme des Rückstellelements (37) für das Rückschlagelement (18) am anderen Ende, und mit einem zweiten, zylindrischen Teil, in welchem das Rückschlagelement (18) bewegbar ist, wobei der zylindrische Teil (30) teilweise über den doppelttopfförmigen Teil (31) geschoben ist.

12. Pneumatische Bremsanlage mit einem Ventil nach einem der voranstehenden Ansprüche.

## Claims

1. Valve (10), for pneumatic applications in vehicles, having a pressure input (11), a pressure output (12), a switching element (13) and a restoring element (15), it being possible for the switching element (13) to be moved between a shut-off position and a passage position, the transition from the passage position to the shut-off position being dependent on the pressure at the pressure input (11) and the opposing force of the restoring element (15), and a check element (18) being integrated into the switching element (13), which check element (18) closes only when the pressure at the pressure output (12) is higher than at the pressure input (11), **characterized in that**, in the shut-off position of the switching element (13), the check element (18) can release a passage in the direction from the pressure input (11) to the pressure output (12).

2. Valve according to Claim 1, **characterized in that** the check element (18) is assigned a restoring element (37) which loads the check element (18), in particular, coaxially with respect to the restoring element (15) of the switching element (13).

3. Valve according to Claim 1 or 2, **characterized in that** the switching element (13) has one or more openings (39) which, in a passage position of the check element (18), connect the pressure input (11) to a space (40) which leads to the pressure output (12).

4. Valve according to one of Claims 1 to 3, **characterized in that** the check element (18) can be moved, in particular, coaxially with respect to the switching element (13), between the shut-off position and the passage position (air flow 19), a circumferential sealing seat, in particular an edge (34), bearing against a seal (35) in the shut-off position of the check element (18), and, in particular, the check element (18) having the seal (35).

5. Seal according to one of Claims 2 to 4, **characterized in that** the seal (28) which interacts with the sealing seat (27) of the switching element (13) is inserted on the inside into a cylindrical housing (14).

6. Valve according to one of Claims 1 to 5, **characterized in that**, in the axial direction on the end side, the switching element (13) has an opening (33) with a circumferential edge (34) for bearing against the check element (18), the opening (33) being connected to the pressure input (11).

7. Valve according to Claim 6, **characterized in that**, on a side of the check element (18) which lies opposite the opening (33), the switching element (13) has a restoring element (37) for the check element (18) and a receptacle for the restoring element (37).

8. Valve according to Claim 6 or 7, **characterized in that** the switching element (13) has openings (39) laterally, between the edge (34) for bearing against the check element (18) and the check element (18) in the passage position, for the connection of the pressure input (11) to a space (40) outside the switching element (13), the space (40) being connected to the pressure output (12).

9. Valve according to one of Claims 6 to 8, **characterized in that** the switching element (13) can be moved axially in a cylindrical housing (14), with the restoring element (15) at one end and the check element (18) at the other end, the housing (14) having an opening (21), in particular for the connection to atmospheric pressure, in the region of the restoring element (15) for the switching element (13).

10. Valve according to Claim 9, **characterized in that**, lying opposite the opening (21), the switching element (13) has a chamber (22) for receiving a part of the restoring element (15), and **in that** the switching element (13) preferably has a seal (23) with respect to the housing (14) on the outer side at the level of the chamber (22).

11. Valve according to one of Claims 1 to 10, **characterized in that** the switching element (13) is configured in two pieces, namely with a double pot-shaped part (31) for receiving the restoring element (15) for the switching element (13) at one end and for receiving the restoring element (37) for the check element (18) at the other end, and with a second, cylindrical part, in which the check element (18) can be moved, the cylindrical part (30) being pushed partially over the double pot-shaped part (31).

12. Pneumatic brake system having a valve according to one of the preceding claims.

## Revendications

1. Soupape (10), pour applications pneumatiques dans des véhicules automobiles, comprenant une entrée de pression (11), une sortie de pression (12), un élément de commutation (13) et un élément de rappel (15), dans laquelle l'élément de commutation (13) est déplaçable entre une position de blocage et une position de passage, dans laquelle la transition de la position de passage à la position de blocage dépend de la pression au niveau de l'entrée de pression (11) et de la force antagoniste de l'élément de rappel (15), et dans laquelle un élément antiretour (18) est intégré dans l'élément de commutation (13), lequel élément antiretour ne se ferme que lorsque la pression est plus élevée au niveau de la sortie de pression (12) qu'au niveau de l'entrée de pression (11), **caractérisée en ce que** l'élément antiretour (18) peut, dans la position de blocage de l'élément de commutation (13), libérer un passage dans le sens de l'entrée de pression (11) vers la sortie de pression (12).

2. Soupape selon la revendication 1, **caractérisée en ce qu'**un élément de rappel (37) est associé à l'élément antiretour (18), lequel élément de rappel sollicite l'élément antiretour (18) en particulier coaxialement à l'élément de rappel (15) de l'élément de commutation (13) .

3. Soupape selon la revendication 1 ou 2, **caractérisée en ce que** l'élément de commutation (13) comprend une ou plusieurs ouvertures (39), lesquelles relient, dans une position de passage de l'élément antiretour (18), l'entrée de pression (11) à un espace (40) menant jusqu'à la sortie de pression (12).

4. Soupape selon l'une des revendications 1 à 3, **caractérisée en ce que** l'élément antiretour (18) est déplaçable en particulier coaxialement à l'élément de commutation (13), entre la position de blocage et la position de passage (écoulement d'air 19), un siège d'étanchéité périphérique, en particulier un bord (34), s'appuyant contre un joint d'étanchéité (35) dans la position de blocage de l'élément antiretour (18), et l'élément antiretour (18) comprenant en particulier le joint d'étanchéité (35).

5. Soupape selon l'une des revendications 2 à 4, **caractérisée en ce que** le joint d'étanchéité (28) coopérant avec le siège d'étanchéité (27) de l'élément de commutation (13) est inséré à l'intérieur d'un carter cylindrique (14).

6. Soupape selon l'une des revendications 1 à 5, **caractérisée en ce que** l'élément de commutation (13) comprend, du côté frontal dans la direction axiale, une ouverture (33) dotée d'un bord périphérique (34) pour l'appui de l'élément antiretour (18), l'ouverture (33) étant reliée à l'entrée de pression (11).

7. Soupape selon la revendication 6, **caractérisée en ce que** l'élément de commutation (13) comprend, sur un côté de l'élément antiretour (18) opposé à l'ouverture (33), un élément de rappel (37) pour l'élément antiretour (18) et un logement pour l'élément de rappel (37) .

8. Soupape selon la revendication 6 ou 7, **caractérisée en ce que** l'élément de commutation (13) comprend latéralement, entre le bord (34) pour l'appui de l'élément antiretour (18) et l'élément antiretour (18) dans la position de passage, des ouvertures (39) pour la liaison de l'entrée de pression (11) à un espace (40) à l'extérieur de l'élément de commutation (13), l'espace (40) étant relié à la sortie de pression (12) .

9. Soupape selon l'une des revendications 6 à 8, **caractérisée en ce que** l'élément de commutation (13) est déplaçable axialement dans un carter cylindrique (14), avec l'élément de rappel (15) à une extrémité et l'élément antiretour (18) à l'autre extrémité, le carter (14) comprenant, dans la région de l'élément de rappel (15) pour l'élément de commutation (13), une ouverture (21), en particulier pour la liaison à la pression atmosphérique.

10. Soupape selon la revendication 9, **caractérisée en ce que** l'élément de commutation (13) comprend, en regard de l'ouverture (21), une chambre (22) pour la réception d'une partie de l'élément de rappel (15), et **en ce que** l'élément de commutation (13) comprend, du côté extérieur, à hauteur de la chambre (22), de préférence un joint d'étanchéité (23) par rapport au carter (14).

11. Soupape selon l'une des revendications 1 à 10, **caractérisée en ce que** l'élément de commutation (13) est réalisé en deux parties, à savoir avec une partie (31) en forme de double pot pour la réception de l'élément de rappel (15) pour l'élément de commutation (13) à une extrémité et pour la réception de l'élément de rappel (37) pour l'élément antiretour (18) à l'autre extrémité, et avec une deuxième partie cylindrique, dans laquelle l'élément antiretour (18) est déplaçable, la partie cylindrique (30) étant poussée partiellement sur la partie (31) en forme de double pot.

12. Système de freinage pneumatique comprenant une soupape selon l'une des revendications précédentes.
